Europäisches Patentamt

European Patent Office

Office européen des brevets

(11) Publication number : **0 480 662 A1**

# (12) EUROPEAN PATENT APPLICATION

(21) Application number : **91309185.6**

(22) Date of filing : **07.10.91**

(51) Int. Cl.⁵ : **F16K 31/145, E03C 1/05**

(30) Priority : **09.10.90 US 594607**

(43) Date of publication of application :
**15.04.92 Bulletin 92/16**

(84) Designated Contracting States :
**AT CH DE ES FR GB IT LI NL**

(71) Applicant : **Chuang, Huo-Lien**
**1.4F 17 Lane 281, Hsian St. Sec. 1, Peitou**
**District**
**Taipei (TW)**
(71) Applicant : **Chuang, Shih-Wei**
**1.4F 17 Lane 281, Hsian St. Sec. 1, Peitou**
**District**
**Taipei (TW)**
(71) Applicant : **Chuang, Kan-Jung**
**1.4F 17 Lane 281, Hsian St. Sec. 1, Peitou**
**District**
**Taipei (TW)**

(72) Inventor : **Chuang, Huo-Lien**
**1.4F 17 Lane 281, Hsian St. Sec. 1, Peitou**
**District**
**Taipei (TW)**
Inventor : **Chuang, Shih-Wei**
**1.4F 17 Lane 281, Hsian St. Sec. 1, Peitou**
**District**
**Taipei (TW)**
Inventor : **Chuang, Kan-Jung**
**1.4F 17 Lane 281, Hsian St. Sec. 1, Peitou**
**District**
**Taipei (TW)**

(74) Representative : **W.P. THOMPSON & CO.**
**Eastcheap House Central Approach**
**Letchworth, Hertfordshire SG6 3DS (GB)**

(54) **Foot-controlled water tap.**

(57) A foot-controlled water tap for regulating the outflow of water from a water tap by means of air pressure comprises a bladder 1 connected to an air bellows 81 within the water tap by a passageway 3, a valve block 86, a ring body 67 and a knob 52 forming the water tap. When the bladder 1 is stepped upon by foot the air inside is compressed and squeezed through the passageway 3 to the bellows 81 which expands and pushes a platform 35 downwards. The platform 35 is fixed to a stem 18 mounted within the ring body 67 and the valve block 86 and thus the stem 18 also moves downwards and away from the opening of the valve block 86 through which water flows allowing water to flow through the valve block 86. Water is stopped by releasing the pressure applied to the bladder 1 which allows the restoring force of a spring 17 to push the platform 35 and hence the stem 18 upwards moving the stem 18 back to its original position and forcing air from the bellows 81 through the passageway 3 to the bladder 1. The tap can also be controlled by hand through a knob 52 like an ordinary water tap. A liguid can replace the air in the bladder 1, passageway 3 and bellows 81.

FIG. 5

EP 0 480 662 A1

The present invention relates to a foot-controlled water tap for regulating water outflow. A conventional water tap is usually controlled by turning a knob by hand. The above operation for getting water from a water tap is commonplace, however it conceals many disadvantages that directly influence our lives.

As a water tap is usually turned on with an uncleaned hand, the turning knob of the water tap becomes contaminated. Thus although one's hands are cleaned after washing, when one reaches to turn the knob, one's hand will be contaminated and has to be washed again.

Some people will not dare to touch frequently used water taps in densely populated public places such as hospitals and public lavatories, as they are afraid of being contaminated and getting infectious diseases. When a housewife is busy with household chores, her hands may sometimes be greasy and dirty. It can therefore be extremely inconvenient and impractical to use her hands to turn on the water tap.

In addition, in a country such as Taiwan with a population of 20 million people, water is habitually wasted unintentionally. As shown in appendices 1 and 2, approximately 109 billion litres of water is used in Taiwan per year, the total bill for which is about 600 million Taiwanese dollars. If one makes the same assumptions about the USA, population 200 million, it is calculated that the USA uses 14 billion litres of water per year, the bill for which is enormous. If some of this money were saved, it could be spent on other constructions or other benefits for the country and people would have a better quality of life and be wealthier.

Therefore this invention is based on the problem of providing a convenient and practical device which does not lead to the disadvantages described above.

The invention is defined in the claims, to which reference should now be made.

The present invention can thus provide a water tap which can be controlled by foot without using the hands. Hands are thus not contaminated again after a thorough wash. It is necessary simply to step on the bladder of the tap and water flows out from the tap. When the bladder is released, water stops flowing. The force pressing on the bladder may regulate the outflow. If a long period of water outflow is necessary, the present invention can also be controlled as an ordinary water tap.

The present invention can provide a tap comprising a compressing bladder connected to an air bladder in the water tap through a passageway (with outer radius, e.g., 0.3cm, inner radius 0.2cm), a valve block, a ring body and a knob associated to define a water tap. When the bladder is stepped upon, the compressed air pressure is induced inside to provide a pushing force through the narrow passageway to the internal air bladder which expands and presses the stem of the valve body out of its closing position. Water is therefore let out. When one stops pressing on the compressing bladder, the air is sucked back from the internal air bladder to the external compressing bladder by a spring installed round the valve stem pulling the stem up to block the water outlet. The stepping on and releasing of the compressing bladder by foot to control the water outflow of the water tap replaces the conventional way of hand-controlling the water outflow. On the other hand, the present invention can also be controlled by hand as an ordinary water tap when a long period of water outflow is necessary. A person may step on the compressing bladder by foot and wash his hands first and then use a cleaned hand to turn on the water for thorough washing. After both hands are cleaned, the water tap is turned off with a clean hand without contaminating the turning knob of the tap. It is a clean as well as convenient operation.

For a better understanding of the characteristics and structure of the present invention please refer to the following detailed description and drawings of an embodiment of the invention. In the drawings:

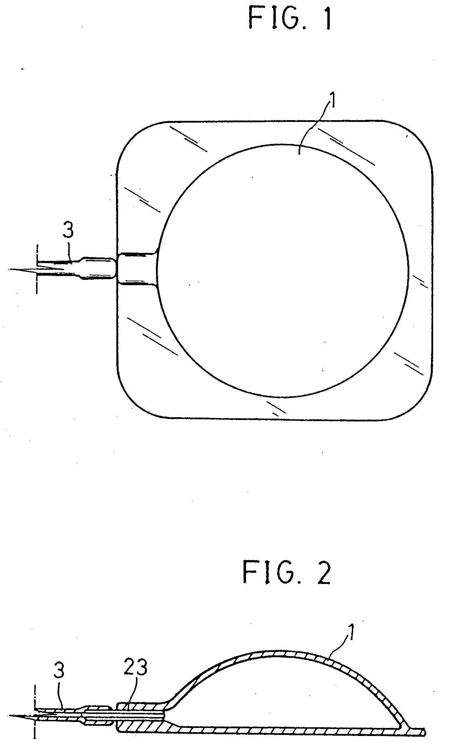

Fig. 1 is the top view of the external bladder of a tap according to the present invention,

Fig. 2 is the vertical sectional view of Fig. 1,

Fig. 3 is a perspective view of the tap of Fig. 1,

Fig. 4 is a horizontal sectional view of the tap of Fig. 1,

Fig. 5 is a vertical sectional view of the tap of Fig. 1, showing the internal structure of the tap in its closed condition,

Fig. 6 is a view similar to Fig. 5 with the water tap in its fully open condition operated by the expansion of the bladder, and

Fig. 7 is a view similar to Fig. 6 with the water tap in its fully open condition operated by the turn knob.

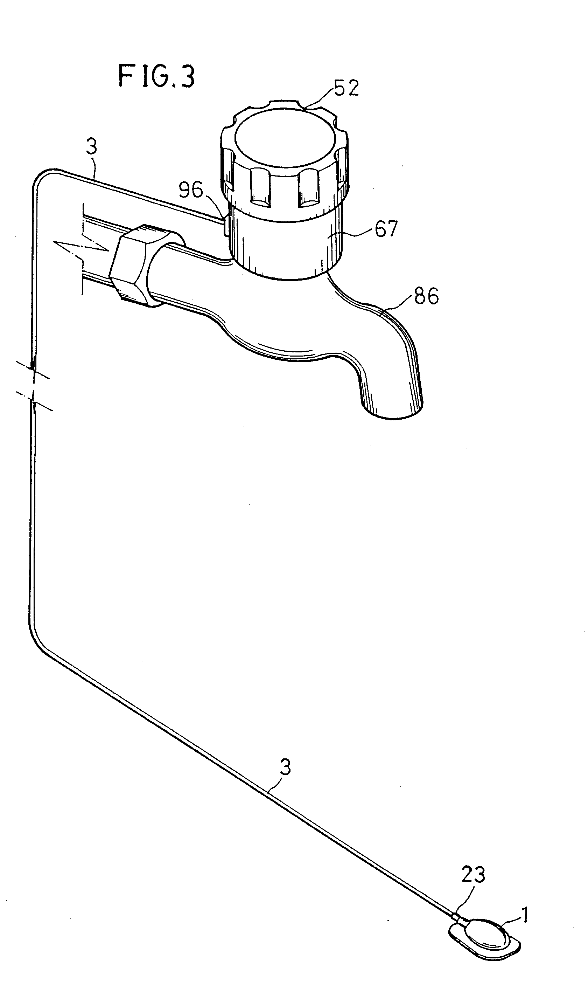

Referring to Fig. 3, an external compressing bladder 1 is connected to a water tap through an adaptor 23 which is connected to a passageway 3 connected to an air inlet 96 on the tap. The air inlet is further connected to a flexible air bellows 81 inside the tap. The compressing bladder 1 is made of rubber, flexible plastics or metal. It is hemispherical in shape and is permanently fixed onto the cement floor or tiles of the bathroom by means such as strong adhesive.

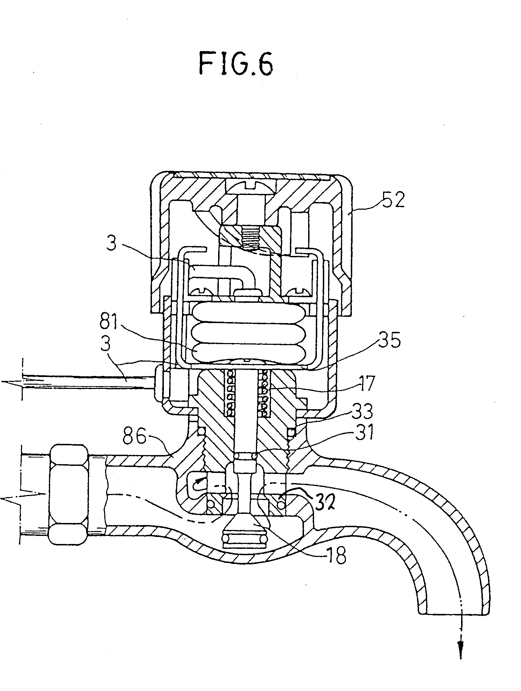

When the compressing bladder 1 is pressed on by foot the air inside is squeezed out from the bladder 1 to the air inlet 96 through an adapter 23 of the passageway 3. As illustrated in Fig. 6, air is blown into the air bellows 81 which expands and exerts a downward pressure onto a platform 35. A valve stem 18 is pushed away from a valve seat insert 32 and water flows out in the direction as indicated by arrows.

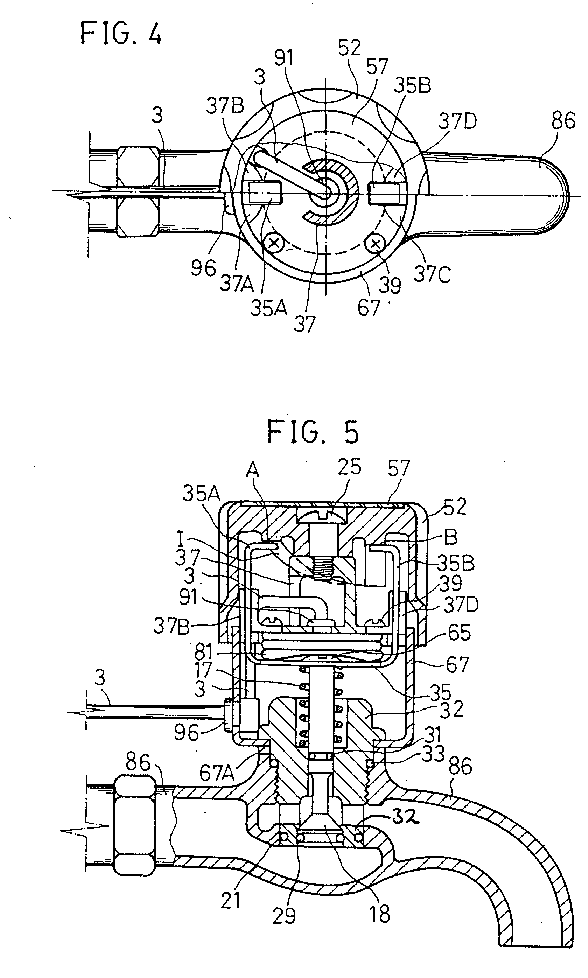

If the foot stops pressing on the bladder 1, the pressure in the bladder 1 is released and a suction force is induced so that the air is drawn back to the compressing bladder 1 from the air bellows 81 via the passageway 3. While the bladder 1 is recovering in shape a spring 17 axially disposed on the stem 18 recovers from compression and brings the stem 18 into contact with the valve seat 32. Water is therefore stopped as shown in Fig. 5.

The water tap shown in Fig. 3 comprises a knob 52 disposed on the top of the tap for long term control of water flow, a ring body 67 firmly mounted on a valve block 86 with a valve seat 32, shown in Fig. 5. A protrusion 67A on the body 67 engages in the connection between the valve block 86 and the ring body 67 so as to prevent disengagement. The central hole of the valve seat 32 receives the stem 18 whose lower and middle end are respectively disposed with a large seal ring 29 and a small seal ring 31 to prevent leakage. A spring 17 is axially mounted on to the stem 18 in such a manner that the bottom of a platform 35 and the valve seat 32 abut each other. The water outflow is controlled by the position of stem 18 in the valve block 86.

The platform 35 is firmly secured onto the top of the stem 18 by a screw 65. The platform 35 is in close contact with the air bellows 81 with their surfaces pressing on each other and defining a circular contact surface.

A cam-shaped cant I is disposed on both sides of the knob 52. The two sides of the platform 35 bend upward to define respective angle plates 35A, 35B. The points A, B of the cant I are in contact with inwardly-turned upper ends of the angle plates 35A, 35B in such a way that the plates 35A, 35B slide up and down along the cant I when the knob S2 is turned.

The passageway 3 is inserted into the external end of an angle joint 96 which is firmly engaged in the ring body 67 and is further connected to air nozzle 91 of the air bellows 81 which is anchored by a securing seat 37 in the ring body 67. The securing seat 37 is mounted at the upper part of the ring body 67 by means of screws 39.

There are four posts 37A, 37B, 37C, 37D (see Fig. 4) disposed around the securing seat 37. Their function is to ensure that the angle plates 35A, 35B of the platform 35 slide vertically up and down without any sideways movement.

A hollow cylinder is axially disposed in the securing seat 37 which provides an aperture (to the left in Figs. 4 to 7) to introduce the passageway 3 into the water tap and connect it to the air nozzle 91 which is further connected with the air bellows 81.

In the upper part of the hollow cylinder of the securing seat 37 there is a bolt hole into which a central bolt 25 is screwed to fix the knob 52 to the tap. This allows the knob 52 to turn through an angle of 180°. A decorative pad 57 is stuck onto the knob 52.

After describing the structure of this embodiment of the invention its operation is illustrated with reference to Fig. 6.

When it is intended to let water out of the tap, a person steps on the compressing bladder 1 which increases its internal pressure and squeezes air into the bellows 81 through the passageway 3. The bellows 81 thus expands and pushes platform 35 downwards against the force of the spring 17, at the same time moving the stem 18 downwards and allowing water to flow out as indicated by the arrows. If it is intended to stop the water flow the external pressure on the bladder is released which allows the spring 17 to move the platform 35 upwards as the air bellows 81 is compressed to force air back into the bladder 1 through the passageway 3. Thus, as the platform 35 moves upwards the stem 18 connected to it returns to the valve seat 32 and blocks the central opening of the seat 32 which stops the water flow. This is the position shown in Fig. 5.

Operation of the embodiment of the present invention for long term outflow of water is described in the following.

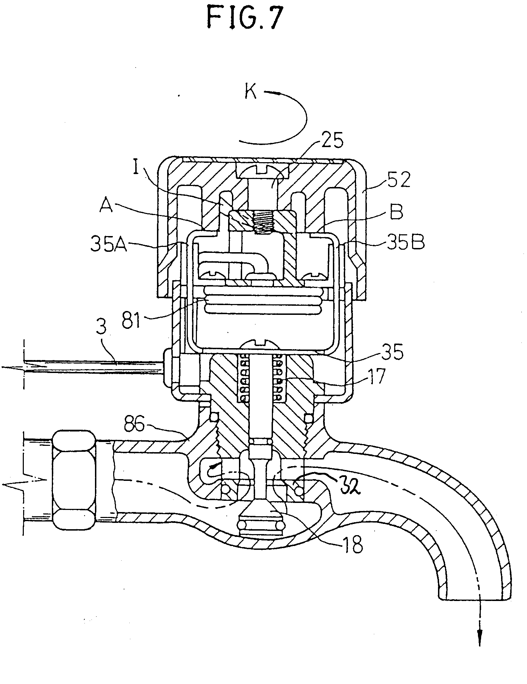

Referring now to Fig. 7, when it is intended to have water flowing for a long period of time, there is no need to step on the compressing bladder 1 but instead the knob 52 is simply turned in the direction shown by the arrow K (anticlockwise through 180°). The upper ends of the angle plates 35A, 35B of the platform 35, then slide downwards along the cant I of the knob 52 and thus the stem 18 connected to platform 32 also moves downwards allowing water to flow through the central opening of the lower part of the valve seat 32 as indicated in Fig. 7. The rate of water flow can be regulated by turning the knob 52 at various angles less than 180°.

To stop the water flow, the knob 52 is turned clockwise through an angle of 180° and the upper ends of the angle plates 35A, 35B are pushed up along the cant I of the knob 52 by the restoring force of the compressed spring 17. The stem 18 returns to a position in which it blocks the central opening of valve seat 32 and the outflow of water is stopped as illustrated in Fig. 6.

The embodiment of the present invention can be controlled by foot and also by hand for a long period of outflow. Therefore the invention is clearly practical.

In conclusion, the invention is characterised by the use of a fluid such as air as a driving means controlled by foot to regulate the outflow from a water tap. The tap can also be controlled by hand as an ordinary water tap. By the attainable advantages of simple structure, low cost, easy operation, non-contamination and water saving, the present invention can be financially beneficial to society as a whole and individual families.

Appendix 1: Table of 80 persons using water for washing hands in different
times and places

| No. of Person | Water Used (litre) | No. of Person | Water Used (litre) | No. of Person | Water Used (litre) | No. of Person | Water Used (litre) |
|---|---|---|---|---|---|---|---|
| 1 | 2.5 | 21 | 1.1 | 41 | 2.3 | 61 | 2.5 |
| 2 | 2.7 | 22 | 3.2 | 42 | 1.8 | 62 | 1 |
| 3 | 1.3 | 23 | 2.8 | 43 | 0.6 | 63 | 1.2 |
| 4 | 1.2 | 24 | 1 | 44 | 1.7 | 64 | 2.7 |
| 5 | 4 | 25 | 1.9 | 45 | 2.5 | 65 | 1.8 |
| 6 | 2.5 | 26 | 0.8 | 46 | 2.1 | 66 | 2.3 |
| 7 | 2 | 27 | 2.5 | 47 | 1.3 | 67 | 1.6 |
| 8 | 2.6 | 28 | 2.2 | 48 | 3.4 | 68 | 2.5 |
| 9 | 1.1 | 29 | 1.4 | 49 | 1.2 | 69 | 1.4 |
| 10 | 1.7 | 30 | 2.5 | 50 | 2 | 70 | 2.4 |
| 11 | 2.2 | 31 | 1.7 | 51 | 1.4 | 71 | 0.7 |
| 12 | 2.7 | 32 | 1.9 | 52 | 1.7 | 72 | 2.7 |
| 13 | 0.9 | 33 | 2.8 | 53 | 2.2 | 73 | 1.2 |
| 14 | 2.3 | 34 | 2.3 | 54 | 1.9 | 74 | 3.5 |
| 15 | 2.2 | 35 | 2 | 55 | 3.1 | 75 | 2.1 |
| 16 | 1.8 | 36 | 1.5 | 56 | 1.4 | 76 | 1.8 |
| 17 | 3 | 37 | 2.6 | 57 | 0.8 | 77 | 1.7 |
| 18 | 0.5 | 38 | 1.4 | 58 | 1.7 | 78 | 2.4 |
| 19 | 1.7 | 39 | 2.1 | 59 | 1.1 | 79 | 3.2 |
| 20 | 2.4 | 40 | 2.5 | 60 | 3 | 80 | 2.9 |
| Total | 41.3 | Total | 40.1 | Total | 37.3 | Total | 41.6 |

average volume of water used/person each time: 2 .00375 litres

$\div$ (41.3 + 40.1 + 37.3 + 41.6) - 80 = 2.00375 (litres)

Appendix 2 : assumed frequency of hand wash each person/day

| | Before Meal (after) | Before Urination (after) | Before Excretion (after) | Others (on duty etc) | Total |
|---|---|---|---|---|---|
| Frequency | 3 | 3 | 1 | 3 | 10 |

Equation (1):

Water used/Person each time X Frequency/day X No. of person = Total volume of water used

2.00375 (1) X 10 X 365 X 1.5 X 10 = 109705312500 (1)

$$= 109705312.5 \ (m^3)$$

Equation (2):

Total volume of water used X Charge/unit volume = Total amount of water bill

$$109705312.5 \ (m^3) \ X \ 5.6 \ (NT/m^3) = 614349750 \ (NT)$$

∻ Charge: NT5.6/$m^3$ (information: Taipei Water Department)

∻ Effective capacity in Shin-Men Reservior is 250 million $m^3$

(information: Reservior Service Office in Shin-Men Reservior)

**Claims**

1. 1. A foot- and hand-operable water tap comprising a tap body having a water inlet, a water outlet and a water-flow passage extending therebetween, flow-regulating means movable between first and second

5

positions in which the water-flow passage is respectively closed and open to flow of water therethrough, foot-operable remote actuating means for the flow-regulating member and manually-operable actuating means comprising a manually-operable member mounted on the tap body and operatively connected to the flow-regulating member, the foot-operable actuating means and the manually-operable actuating means each having a first condition and a second condition corresponding respectively to the first and second positions of the flow-regulating means, and the actuating means being arranged so that the flow-regulating means moves from its first to its second position in response to change of either actuating means from its first to its second condition, is retained in its second position so long as one or both actuating means is in its second condition and is returned to its first position when both actuating means are restored to their first conditions.

2. A tap according to claim 1, wherein the foot-operable actuating means comprises a closed fluid system comprising a compressible bladder for location remotely from the tap body, an expandable bellows within the tap body and operatively connected to the flow-regulating means, and a conduit extending between the bladder and the bellows.

3. A tap according to claim 1 or 2, including resilient biassing means biassing the flow-regulating means into its first position.

4. A tap according to claims 2 and 3, wherein the flow-regulating means comprises a valve member having a stem and a sealing head, the resilient biassing means comprises a helical compression spring surrounding the valve stem and the expandable bellows acts between the tap body and a seating on the end of the valve stem remote from its sealing head.

5. A tap according to claim 4, wherein the manually-operable actuating means comprises a rotatable member having ramp surfaces engaging extension portions of the seating extending laterally of the bellows and away from the valve stem, whereby rotation of the rotatable member in a first direction produces linear movement of the valve member from its first to its second position and rotation in the opposite direction allows the valve member to return to its first position.

6. A foot-controlled water tap for regulating the outflow of water from a water tap by means of air pressure to control the outlet of the water tap, comprising:
   a valve block of a conventional type with an outflow channel which can be closed by a valve stem:
   a ring body screwed onto the valve block by means of a valve insert having a valve seat, which is centrally disposed with the stem therein and is surrounded by a spring, the top of the stem securing a platform element thereon with an air bladder positioned therein, the upper part of the bladder being associated with an air nozzle which is connected to an external pressure source by means of an angle joint; the stem being inserted into the central opening of the valve insert having a middle and bottom part thereof and mounting seal rings at the middle and bottom parts thereby preventing leakage; the spring surrounding the stem for pushing the platform and the stem upward for blocking the outlet opening of the valve seat and preventing water outflow through the outflow channel;
   a knob of a shape that is compatible with the ring body on which it is mounted, a cant surface disposed on the internal flange of the knob, which is generally in close contact with the platform of the ring body, whereby turning the knob in one direction increases the inclination of the cant surface and causes the cant surface to engage the platform, thereby gradually moving the platform downward which pushes the stem downward and opens the outflow channel;
   said pressure source includes a compressing bladder for blowing air into the air bladder defining a hollow chamber which allows accommodation of air and is made of flexible material; and
   a passageway connecting the air bladder in the ring body and the compressing bladder defining a conduit made up to flexible material; air passing through the passageway to the air bladder when the compressing bladder is stepped upon, blowing up the air bladder which expands and pushes the platform downward and compresses the spring, while at the same time the stem is pushed and moved away from the opening of the valve seat and permits water outflow through the outflow channel; when the compressing bladder released air is sucked back from the air bladder to relieve the platform and the spring restores and moves the stem upward to block the opening of the seat valve, to stop the water outflow through the outflow channel.

7. A foot-controlled water tap according to claim 6, wherein the base of the stem in the ring body includes a polygonal shape stopper element which defines an inclination on either side such that the stem describes a close contact with the outlet opening of the valve seat to ensure a tight closure, if the stem is moving downward, water flowing between the base of stem and the opening of the valve seat so as to reduce the resistance against outflow and increases the volume of outflow.

8. A foot-controlled water tap according to claim 6 or 7, wherein the air in the compressing bladder is substituted by liquid.

FIG. 1

FIG. 2

# FIG.3

FIG. 4

FIG. 5

# FIG.6

# FIG.7

**European Patent Office**

# EUROPEAN SEARCH REPORT

Application Number

## DOCUMENTS CONSIDERED TO BE RELEVANT

EP 91309185.6

| Category | Citation of document with indication, where appropriate, of relevant passages | Relevant to claim | CLASSIFICATION OF THE APPLICATION (Int. Cl. 5) |
|---|---|---|---|
| X | <u>GB - A - 1 590 757</u> (CONSERVOCON INC.) * Totality * | 1 | F 16 K 31/145 E 03 C 1/05 |
| Y | | 2-4 | |
| A | | 5-8 | |
| Y | <u>US - A - 3 637 187</u> (BURGER) * Fig. 1 * | 2-4 | |
| A | | 5-8 | |
| A | <u>US - A - 4 729 135</u> (TITTERINGTON) * Totality * | 1,6 | |
| A | <u>FR - A - 2 534 348</u> (PROCI) * Totality * | 1,6 | |

TECHNICAL FIELDS SEARCHED (Int. Cl.5)

E 03 C 1/00
E 03 D 5/00
F 16 K 31/00

The present search report has been drawn up for all claims

| Place of search | Date of completion of the search | Examiner |
|---|---|---|
| VIENNA | 09-12-1991 | FIETZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                        
& : member of the same patent family, corresponding document

EPO FORM 1503 03.82 (P0401)